# EUROPEAN PATENT SPECIFICATION

(11) **EP 3 442 771 B1**
(45) Date of publication and mention of the grant of the patent: **02.09.2020**
(21) Application number: 17726383.7
(22) Date of filing: 24.03.2017
(51) Int. Cl.: B29C 51/06, B29C 51/26, B29C 51/10, B29C 51/14, B29C 51/30, B29C 51/42

(54) **SYSTEM AND PROCESS FOR VACUUM MOLDING**
VORRICHTUNG UND VERFAHREN ZUM VAKUUMFORMEN
APPAREIL ET PROCÉDÉ POUR MOULAGE SOUS VIDE

(30) Priority: 15.04.2016 IT UA20162593
(43) Date of publication of application: 20.02.2019
(73) Proprietor: Persico S.p.A., 24027 Nembro (BG) (IT)
(72) Inventor: MAZZON, Romeo, I-24027 Nembro (BG) (IT); SCARPELLINI, Marco, I-24027 Nembro BG (IT)
(74) Representative: Tirloni, Bartolomeo
(86) International application number: PCT/IT2017/000061
(87) International publication number: WO 2017/179081

(56) References cited:
- EP-A1- 1 648 684
- EP-A2- 2 428 349
- WO-A1-2007/128397
- US-A- 1 387 617
- US-A- 1 497 592
- US-A- 4 443 401
- US-A1- 2001 018 080

## Description

The present invention refers to a system and a process for making a moulded article made of foamed material.

In general, the present invention refers to dies for forming plastic items subjected to the application of surface layers. For example, a coating applied on the surface of the die before inserting a molding material or composite, the coating being applied in a solid sheet and comprising separating or detaching agents.

In particular, the present invention refers to forming systems employing the internal pressure generated in the material. For example, forming of foam, items made of foamed plastics, items made of porous or cellular plastics, plastic materials, such as gommapiuma, elastomers, such as rubber.

In particular, the present invention refers to dies or cores with coatings, for example, of the enamel-coated or zinc-coated type, release coatings, such as oil or separating and detaching agents, such as sheets, laminati.

The state of the art is given by patent US5728333A dealing with a moulded item made of rigid polyurethane foam produced by using a die composed of an upper part and a lower part which are separable and adapted to be mutually coupled to define a recess between them. A film of polypropylene is previously taken under vacuum to be suited to the recess inside the die and fastened to the lower part of the die, outside the recess. A foam generating agent and rigid polyurethane are inserted in the recess and on the film, making the foam expand to model an item made of rigid foamed polyurethane. Afterwards, the moulded article is lifted with the film from the recess of the die by a pneumatic pressure or by an extractor. The moulded article is removed from the film.

Patent US5728333A allows providing a method for preparing a moulded article made of rigid foamed polyurethane using a die in combination with a film or plastic film, removing the additional passage of separating the moulded article from the plastic film, guaranteeing the early expulsion of the moulded article from the die, preventing the plastic film from deforming to allow reusing the plastic film, with advantages such as the reduction of the occupation time of the die, an increase of the number of molding press operations per unit of time and better productivity. The moulded article is removed from the film which, once lifted, is returned to its original shape.

Moreover, the state of the art is given by patent application DE201010032095A1, which deals with a process for producing a decorative part having a carrier layer, a layer of foam and a decorative layer. In particular, a supporting layer is placed in a first tool of a tool-holder device, a separating layer is placed inside a second tool of the tool-holder device, allowing to close the first and the second tool so that, between the separating layer and the carrier layer, a recess is at least partially formed. A layer of foam is injected in the recess included between the carrier layer and the separating layer through a foaming device, wherein the materials of the layer of foam and the separating layer are configured so that, between the separating layer and the layer of foam, a releasable connection is formed, when the two tools are separated, allowing to remove the carrier layer and the layer of foam. At the end of the process, the direct lamination of the layer of foam is performed with the decorative layer, after the separation of the movable connection between the release layer and the layer of foam.

The state of the art does not deal with operating problems when tensioning and the fastening of the plastic film used as separator and detaching agent of the moulded article with respect to the wall of the die.

Documents US-A-1 387 617 discloses a system according to the preamble of Claim 1.

Object of the present invention is solving the above prior art problems by providing a system for making a moulded article made of foamed material including tensioning and locking means of detaching means such as a plastic film.

A further object is providing a process dealing with the use of such tensioning and locking means.

The above and other objects and advantages of the invention, as will appear from the following description, are obtained with a system for making a moulded article made of foamed material, as claimed in claim 1 and with a process for making a moulded article made of foamed material, as claimed in claim 8.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
Figure 1 shows a die essentially composed of two sections of an embodiment of the system for making a moulded article made of foamed material, according to the present invention;
Figure 2 shows a component of an embodiment of the system for making a moulded article made of foamed material, according to the present invention;
Figure 3 shows one of the two sections of Figure 1;
Figure 4 shows a first configuration made through the composition of Figures 2, 3;
Figure 5 shows a second configuration made through the composition of Figures 2, 3; and
Figure 6 shows a final configuration of Figure 3.

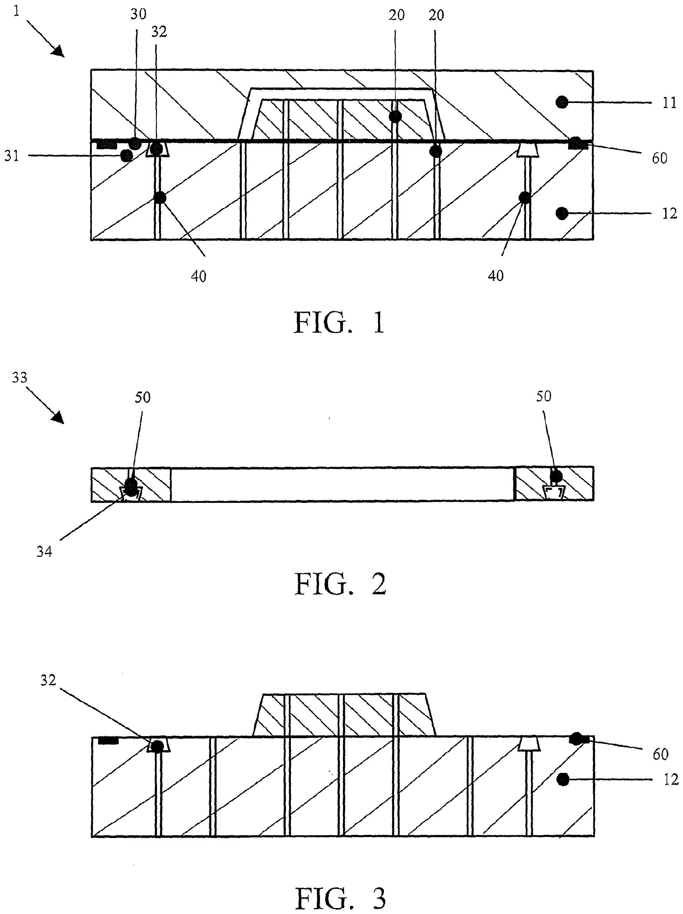

With reference to Figure 1, it is possible to note that a system for making a moulded article made of foamed material comprises a die 1 essentially composed of sections, respectively an upper section 11 and a lower section 12, which are separable and coupled to define a recess, first sucking means 20 adapted to create a vacuum to allow shaping a plastic film on the wall of at least one portion of the recess of sections 11 and 12, tensioning and locking means 30 of the plastic film to allow positioning and fastening the plastic film outside the recess, injecting means of foamed raw material, in contact with the plastic film to allow the foamed raw material to be expanded in the recess in order to model the moulded article made of rigid foamed material, means for expelling the moulded article and the plastic film and means for detaching the moulded article with respect to the plastic film.

Advantageously, such tensioning and locking means 30 of the plastic film comprise a fixed frame 31 equipped with at least one internal perimeter groove 32. In particular, the internal groove 32 is peripherally arranged with respect to the recess of the sections 11 and 12 and connected to second sucking means 40 to create a vacuum adapted to allow tensioning and blocking the plastic film along the internal groove 32. Moreover, the fixed frame 31 lays integrally with at least one of the sections 11 and 12, next to a deformable peripheral gasket 60. The deformable gasket 60 allows air-tightly insulating the recess of the sections 11 and 12.

With reference to Figure 3, such tensioning and locking means 30 of the plastic film comprise a mobile frame 33 equipped with at least one external perimeter groove 34. The external groove 34 is peripherally arranged with respect to the internal groove 32 and connected to third sucking means 50 adapted to create a vacuum to allow tensioning and blocking the plastic film along the external groove 34.

With reference to Figure 3, 4, 5, the mobile frame 33 is mechanically joined with at least one of the sections 11 and 12; in the figure section 12 is shown, to allow positioning the plastic film with respect to the uncoupled sections 11 and 12, before closing the die 1.

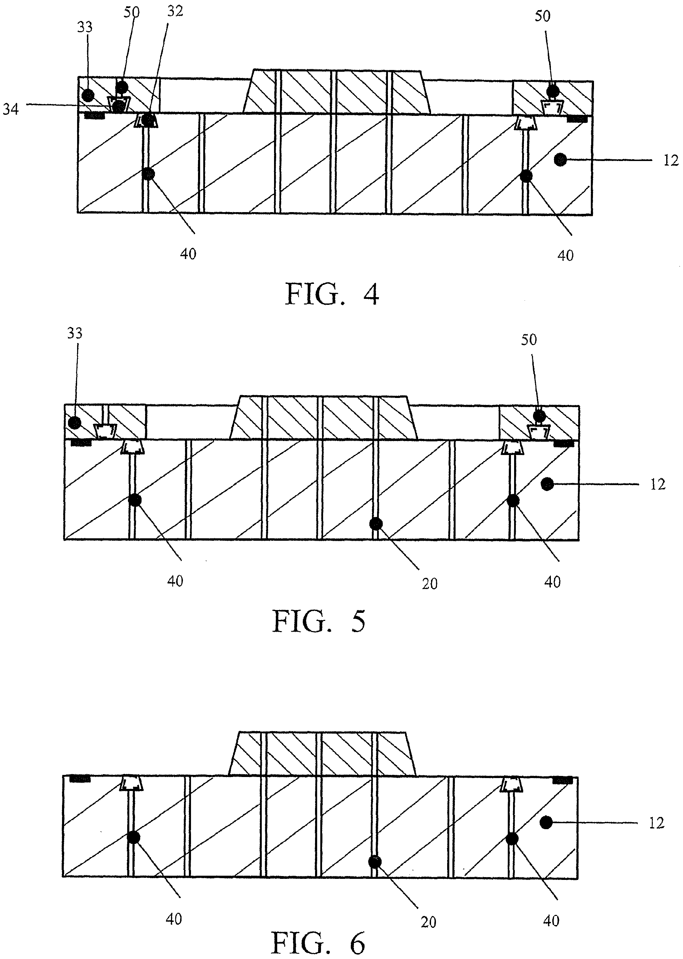

In particular, the mobile frame 33, mechanically joined to at least one of the sections 11 and 12, presses on the deformable peripheral gasket 60. In this configuration, shown in Figures 4 and 5, the deformable gasket 60 is in contact with one of the sections 11 and 12 and with the plastic film.

According to a preferred configuration, the perimeter internal groove 32, 34 is shaped as an undercut to increase the wet perimeter of the internal groove 32, 34 to allow increasing the sliding of the plastic film along the wet perimeter of the internal groove 32, 34, thereby increasing the tensioning and the locking of the plastic film.

The first, second and third sucking means 20, 40, 50 comprise filtering elements adapted to allow distributing the suction action and level the vacuum action, in the recess formed of the coupled sections 11, 12 and in the internal groove 32, 34. Preferably, such filtering elements are made of porous material, of a cylindrical shape and placed in cylindrical seats belonging to the first, second and third sucking means 20, 40, 50.

A process for making a moulded article made of foamed material comprises the following steps, for positioning and tensioning of the plastic film:
a) positioning the stretched plastic film on the mobile frame 33, Figure 2;
b) activating the third sucking means 50 to create the vacuum to allow tensioning and blocking the plastic film with respect to the mobile frame 33, along the perimeter of the external groove 34;
c) positioning the mobile frame 33 with respect to one of the sections 11 and 12 to allow mechanically joining the mobile frame 33 to at least one of the sections 11 and 12, Figure 4;
d) activating the second sucking means 40 to create the vacuum to allow further tensioning and blocking the plastic film, also with respect to the fixed frame 31, along the perimeter of the external groove 32;
e) activating the first sucking means 20 to create the vacuum to allow adhering the plastic film to the portion of recess delimited by at least one of said sections 11 and 12, Figure 5;
f) deactivating the third sucking means 50 to allow separating the plastic film from the mobile frame 33 and to allow mechanically separating the mobile frame 33 with respect to one of the sections 11, 12, Figure 6;
g) starting the moulding procedure by joining the sections 11, 12 of the die 1, Figure 1.

The system of the present invention and its related process allow obtaining the stated objects.

In particular, the system of the invention is suitable for forming a skin product fastened onto the foamed surface through pre-fixing and then compressed through press-covering. The technologic field of application of such system deals with automotive, interiors and dashboards.

Preferably, the plastic film is made of polyethylene, which is used as detaching agent between the polyurethane foam and the die for the foamed product, before passing to the pre-fixing step, in which the skin is fastened onto the foamed surface and then subjected to press-covering.

The film has a thickness of 40:80 micron. The filters for diffusing the vacuum action are of the same type of cigarette filters and are suitable to avoid damaging the die in case of break of the plastic film, with following foam pollution in the vacuum channel.

The die is heated, allowing to easily detach the foam from the protective layer of the plastic film.

One of the advantages of the present invention is that the film allows replacing the fluid detaching agent, of the lubricating oil type.

Moreover, moulding of the foamed piece is performed without interposing a detaching agent.

## Claims

1. System for making a moulded article made of foamed material, comprising a die (1) essentially composed of sections, respectively an upper section (11) and a lower section (12), which are separable and coupled to define a recess, first sucking means (20) adapted to create a vacuum to allow shaping a plastic film on a wall of at least one portion of the recess of said sections (11) and (12), tensioning and locking means (30) of the plastic film to allow positioning and fastening the plastic film outside the recess, said tensioning and locking means (30) of the plastic film comprising a fixed frame (31) equipped with at least one internal perimeter groove (32), said at least one internal groove (32) being peripherally arranged with respect to the recess of said sections (11) and (12) and connected to second sucking means (40) to create a vacuum adapted to allow tensioning and blocking the plastic film along said at least one internal groove (32),
wherein said tensioning and locking means (30) of the plastic film comprise a mobile frame (33) equipped with at least one external perimeter groove (34), said at least one external groove (34) being peripherally arranged with respect to said at least one internal groove (32) and connected to third sucking means (50) adapted to create a vacuum to allow tensioning and blocking the plastic film along said at least one external groove (34),
**characterized**
**in that** said first and second sucking means (20, 40) comprise filtering elements adapted to allow distributing the suction action and levelling the vacuum action, in the recess formed of said coupled sections (11, 12) and in said internal groove (32, 34).

2. System for making a moulded article made of foamed material according to the previous claim, **characterized in that** said fixed frame (31) lays integrally with at least one of said sections (11) and (12), next to a deformable peripheral gasket (60), said deformable gasket (60) adapted to air-tightly insulate the recess of said sections (11) and (12).

3. System for making a moulded article made of foamed material according to anyone of the previous claims, **characterized in that** said mobile frame (33) is mechanically joined to at least one of said sections (11) and (12), to allow positioning the plastic film with respect to said uncoupled sections (11) and (12), before closing said die (1).

4. System for making a moulded article made of foamed material according to anyone of the previous claims, **characterized in that** said mobile frame (33) mechanically joined to at least one of said sections (11) and (12), presses onto said deformable peripheral gasket (60), said deformable gasket (60) adapted to air-tightly insulate the recess delimited by one of said sections (11) and (12) and by the plastic film.

5. System for making a moulded article made of foamed material according to any one of the previous claims, **characterized in that** said at least one internal perimeter groove (32, 34) is shaped as an undercut to increase the wet perimeter of said at least one internal groove (32, 34) to allow increasing the sliding of the plastic film along the wet perimeter of said at least one internal groove (32, 34), thereby increasing the tensioning and the locking of the plastic film.

6. System for making a moulded article made of foamed material according to any one of the previous claims, **characterized in that** said third sucking means (50) comprise filtering elements adapted to allow distributing the suction action and levelling the vacuum action, in the recess formed of said coupled sections (11, 12) and in said internal groove (32, 34).

7. System for making a moulded article made of foamed material according to the previous claim, **characterized in that** the filtering elements are made of porous material, of a cylindrical shape and placed in cylindrical seats belonging to said first, second and third sucking means (20, 40, 50).

8. Process for making a moulded article made of foamed material through a system according to any one of the previous claims, **characterized in that** it comprises the following steps for positioning and tensioning of the plastic film:
a) positioning the stretched plastic film on the mobile frame (33);
b) activating the third sucking means (50) to create the vacuum to allow tensioning and blocking the plastic film with respect to the mobile frame (33), along the perimeter of the external groove (34);
c) positioning the mobile frame (33) with respect to one of said sections (11) and (12) to allow mechanically joining the mobile frame (33) to at least one of said sections (11) and (12);
d) activating the second sucking means (40) to create the vacuum to allow further tensioning and blocking the plastic film, also with respect to the fixed frame (31), along the perimeter of the external groove (32);
e) activating the first sucking means (20) to create the vacuum to allow adhering the plastic film to the portion of recess delimited by at least one of said sections (11) and (12) ;
f) deactivating the third sucking means (50) to allow separating the plastic film from the mobile frame (33) and to allow mechanically separating the mobile frame (33) with respect to one of said sections (11, 12);
g) starting the moulding procedure by joining the sections (11, 12) of the die (1).

9. Process according to claim 8, wherein said plastic film is made of polyethylene.

## Patentansprüche

1. System zur Herstellung eines geformten Artikels aus geschäumtem Material, umfassend eine Form (1), die im Wesentlichen aus Teilstücken besteht, jeweils einem oberen Teilstück (11) und einem unteren Teilstück (12), die trennbar und gekoppelt sind, um eine Aussparung zu definieren, erste Saugmittel (20), ausgelegt, um ein Vakuum zu erzeugen, um die Gestaltung einer Kunststofffolie an einer Wand von mindestens einem Abschnitt der Aussparung der Teilstücke (11) und (12) zu ermöglichen, Spann- und Verriegelungsmittel (30) der Kunststofffolie, um das Positionieren und Befestigen der Kunststofffolie außerhalb der Aussparung zu ermöglichen, wobei die Spann- und Verriegelungsmittel (30) der Kunststofffolie einen festen Rahmen (31) umfassen, der mit mindestens einer inneren Umfangsnut (32) ausgestattet ist, wobei die mindestens eine innere Nut (32) peripher in Bezug auf die Aussparung der Teilstücke (11) und (12) angeordnet und mit zweiten Saugmitteln (40) verbunden ist, um ein Vakuum zu erzeugen, ausgelegt, um das Spannen und Blockieren der Kunststofffolie entlang der mindestens einen inneren Nut (32) zu ermöglichen,
wobei die Spann- und Verriegelungsmittel (30) der Kunststofffolie einen beweglichen Rahmen (33) umfassen, der mit mindestens einer äußeren Umfangsnut (34) ausgestattet ist, wobei die mindestens eine äußere Nut (34) in Bezug auf die mindestens eine innere Nut (32) peripher angeordnet ist und mit dritten Saugmitteln (50) verbunden sind, ausgelegt, um ein Vakuum zu erzeugen, um das Spannen und Blockieren der Kunststofffolie entlang der mindestens einen äußeren Nut (34) zu ermöglichen,
**dadurch gekennzeichnet, dass** die erste und die zweite Saugmittel (20, 40) Filterelemente umfassen, ausgelegt, um das Verteilen der Saugwirkung und das Nivellieren der Vakuumwirkung in der Aussparung zu ermöglichen, die aus den gekoppelten Teilstücken (11, 12) und in der inneren Nut (32, 34) gebildet ist.

2. System zur Herstellung eines geformten Artikels aus geschäumtem Material nach dem vorhergehenden Anspruch, **dadurch gekennzeichnet, dass** der feste Rahmen (31) einstückig mit mindestens einem der Teilstücke (11) und (12) neben einer verformbaren Umfangsdichtung (60) liegt, wobei die verformbare Dichtung (60) ausgelegt ist, um die Aussparung der Teilstücke (11) und (12) luftdicht zu isolieren.

3. System zur Herstellung eines geformten Artikels aus geschäumtem Material nach einem der vorhergehenden Ansprüche, **dadurch gekennzeichnet, dass** der bewegliche Rahmen (33) mechanisch mit mindestens einem der Teilstücke (11) und (12) zusammengefügt ist, um das Positionieren der Kunststofffolie in Bezug auf die entkoppelten Teilstücke (11) und (12) zu ermöglichen, bevor die Form (1) geschlossen wird.

4. System zur Herstellung eines geformten Artikels aus geschäumtem Material nach einem der vorhergehenden Ansprüche, **dadurch gekennzeichnet, dass** der bewegliche Rahmen (33), der mechanisch mit mindestens einem der Teilstücke (11) und (12) zusammengefügt ist, auf die verformbare Umfangsdichtung (60) drückt, wobei die verformbare Dichtung (60) ausgelegt ist, um die durch eines der Teilstücke (11) und (12) und durch die Kunststofffolie begrenzte Aussparung luftdicht zu isolieren.

5. System zur Herstellung eines geformten Artikels aus geschäumtem Material nach einem der vorhergehenden Ansprüche, **dadurch gekennzeichnet, dass** die mindestens eine innere Umfangsnut (32, 34) als Hinterschnitt gestaltet ist, um den feuchten Umfang der mindestens einen inneren Nut (32, 34) zu erhöhen, um zu ermöglichen, dass das Gleiten der Kunststofffolie entlang des feuchten Umfangs der mindestens einen inneren Nut (32, 34) erhöht wird, wodurch das Spannen und Verriegeln der Kunststofffolie erhöht wird.

6. System zur Herstellung eines geformten Artikels aus geschäumtem Material nach einem der vorhergehenden Ansprüche, **dadurch gekennzeichnet, dass** die dritten Saugmittel (50) Filterelemente umfassen, die ausgelegt sind, um das Verteilen der Saugwirkung und das Nivellieren der Vakuumwirkung in der Aussparung zu ermöglichen, die aus den gekoppelten Teilstücken (11, 12) und in der inneren Nut (32, 34) gebildet ist.

7. System zur Herstellung eines geformten Artikels aus geschäumtem Material nach dem vorhergehenden Anspruch, **dadurch gekennzeichnet, dass** die Filterelemente aus porösem zylindrisch gestaltetem Material hergestellt und in zylindrischen Sitzen angeordnet sind, die zu dem ersten, zweiten und dritten Saugmittel (20, 40, 50) gehören.

8. Verfahren zur Herstellung eines geformten Artikels aus geschäumtem Material durch ein System nach einem der vorhergehenden Ansprüche, **dadurch gekennzeichnet, dass** es die folgenden Schritte zum Positionieren und Spannen der Kunststofffolie umfasst:
a) Positionieren der gedehnten Kunststofffolie auf dem beweglichen Rahmen (33);
b) Aktivieren der dritten Saugmittel (50), um das Vakuum zu erzeugen, um das Spannen und Blockieren der Kunststofffolie in Bezug auf den beweglichen Rahmen (33) entlang des Umfangs der äußeren Nut (34) zu ermöglichen;
c) Positionieren des beweglichen Rahmens (33) in Bezug auf eines der Teilstücke (11) und (12), um eine mechanische Zusammenfügung des beweglichen Rahmens (33) mit mindestens einem der Teilstücke (11) und (12) zu ermöglichen;
d) Aktivieren der zweiten Saugmittel (40), um das Vakuum zu erzeugen, um weiter das Spannen und Blockieren der Kunststofffolie auch in Bezug auf den festen Rahmen (31) entlang des Umfangs der äußeren Nut (32) zu ermöglichen;
e) Aktivieren der ersten Saugmittel (20), um das Vakuum zu erzeugen, um das Anhaften der Kunststofffolie an dem durch mindestens eines der Teilstücke (11) und (12) begrenzten Abschnitt der Aussparung zu ermöglichen;
f) Deaktivieren der dritten Saugmittel (50), um das Trennen der Kunststofffolie vom beweglichen Rahmen (33) zu ermöglichen und das mechanische Trennen des beweglichen Rahmens (33) in Bezug auf eines der Teilstücke (11, 12) zu ermöglichen;
g) Starten des Formvorgangs durch Zusammenfügen der Teilstücke (11, 12) der Form (1).

9. Verfahren nach Anspruch 8, wobei die Kunststofffolie aus Polyethylen besteht.

## Revendications

1. Système de fabrication d'un article moulé en matériau expansé, comprenant une matrice (1) essentiellement composée de sections, respectivement une section supérieure (11) et une section inférieure (12) étant séparables et couplées pour définir un renfoncement, des premiers moyens d'aspiration (20) adaptés pour créer un vide pour permettre la formation d'un film plastique sur une paroi d'au moins une partie du renfoncement desdites sections (11) et (12), des moyens de tension et de blocage (30) du film plastique pour permettre le positionnement et la fixation du film plastique à l'extérieur du renfoncement, lesdits moyens de tension et de blocage (30) du film plastique comprenant un cadre fixe (31) équipé d'au moins une rainure périphérique interne (32), ladite au moins une rainure interne (32) étant disposée de manière périphérique par rapport au renfoncement desdites sections (11) et (12) et reliée à des seconds moyens d'aspiration (40) pour créer un vide adapté pour permettre la tension et le blocage du film plastique le long de ladite au moins une rainure interne (32), dans lequel lesdits moyens de tension et de blocage (30) du film plastique comprennent un cadre mobile (33) équipé d'au moins une rainure périphérique externe (34), ladite au moins une rainure externe (34) étant disposée de manière périphérique par rapport à ladite au moins une rainure interne (32) et reliée à un troisième moyen d'aspiration (50) adapté pour créer un vide afin de permettre la tension et le blocage du film plastique le long de ladite au moins une rainure externe (34),
**caractérisé en ce que** lesdits premier et second moyens d'aspiration (20, 40) comprennent des éléments filtrants adaptés pour permettre de répartir l'action d'aspiration et de niveler l'action du vide dans le renfoncement formé par lesdites sections couplées (11, 12) et dans ladite rainure interne (32, 34).

2. Système de fabrication d'un article moulé en matériau expansé selon la revendication précédente, **caractérisé en ce que** ledit cadre fixe (31) repose intégralement sur au moins une desdites sections (11) et (12) à côté d'un joint périphérique déformable (60), ledit joint déformable (60) étant adapté pour isoler hermétiquement le renfoncement desdites sections (11) et (12).

3. Système de fabrication d'un article moulé en matériau expansé selon l'une quelconque des revendications précédentes, **caractérisé en ce que** ledit cadre mobile (33) est raccordé mécaniquement à au moins une desdites sections (11) et (12) pour permettre le positionnement du film plastique par rapport auxdites sections découplées (11) et (12), avant la fermeture de ladite matrice (1).

4. Système de fabrication d'un article moulé en matériau expansé selon l'une quelconque des revendications précédentes, **caractérisé en ce que** ledit cadre mobile (33), raccordé mécaniquement à au moins l'une desdites sections (11) et (12), se presse sur ledit joint périphérique déformable (60), ledit joint déformable (60) étant adapté pour isoler hermétiquement le renfoncement délimité par l'une desdites sections (11) et (12) et par le film plastique.

5. Système de fabrication d'un article moulé en matériau expansé selon l'une quelconque des revendications précédentes, **caractérisé en ce que** ladite au moins une rainure périphérique interne (32, 34) est façonnée comme une contre-dépouille pour augmenter le périmètre humide de ladite au moins une rainure interne (32, 34) pour permettre d'augmenter le glissement du film plastique le long du périmètre humide de ladite au moins une rainure interne (32, 34), augmentant ainsi la tension et le blocage du film plastique.

6. Système de fabrication d'un article moulé en matériau expansé selon l'une quelconque des revendications précédentes, **caractérisé en ce que** ledit troisième moyen d'aspiration (50) comprend des éléments filtrants adaptés pour permettre de répartir l'action d'aspiration et de niveler l'action du vide dans le renfoncement formé par lesdites sections couplées (11, 12) et dans ladite rainure interne (32, 34).

7. Système de fabrication d'un article moulé en matériau expansé selon la revendication précédente, **caractérisé en ce que** les éléments filtrants sont réalisés en matériau poreux, de forme cylindrique et placés dans des sièges cylindriques appartenant auxdits premier, deuxième et troisième moyens d'aspiration (20, 40, 50).

8. Procédé de fabrication d'un article moulé en matériau expansé par un système selon l'une quelconque des revendications précédentes, **caractérisé en ce qu'**il comprend les étapes suivantes pour le positionnement et la tension du film plastique :
a) positionner le film plastique étiré sur le cadre mobile (33) ;
b) activer le troisième moyen d'aspiration (50) pour créer le vide permettant de tendre et de bloquer le film plastique par rapport au cadre mobile (33), le long du périmètre de la rainure externe (34) ;
c) positionner le cadre mobile (33) par rapport à l'une desdites sections (11) et (12) pour permettre de joindre mécaniquement le cadre mobile (33) à au moins l'une desdites sections (11) et (12) ;
d) activer le second moyen d'aspiration (40) pour créer le vide afin de permettre de tendre et de bloquer davantage le film plastique, également par rapport au cadre fixe (31), le long du périmètre de la rainure externe (32) ;
e) activer le premier moyen d'aspiration (20) pour créer le vide afin de permettre l'adhérence du film plastique à la partie du renfoncement délimitée par au moins une desdites sections (11) et (12) ;
f) désactiver le troisième moyen d'aspiration (50) pour permettre la séparation du film plastique du cadre mobile (33) et pour permettre la séparation mécanique du cadre mobile (33) par rapport à l'une desdites sections (11, 12) ;
g) démarrer la procédure de moulage en joignant la section (11, 12) de la matrice (1).

9. Procédé selon la revendication 8, dans lequel ledit film plastique est en polyéthylène.
